# EUROPÄISCHE PATENTSCHRIFT

(11) **EP 1 186 867 B1**
(45) Veröffentlichungstag und Bekanntmachung des Hinweises auf die Patenterteilung: **02.11.2006**
(21) Anmeldenummer: 00119548.6
(22) Anmeldetag: 07.09.2000
(51) Int. Cl.: G01F 1/58, G01F 15/18

(54) **Erdungsscheibe**
Grounding slice
Disque de mise à la terre

(43) Veröffentlichungstag der Anmeldung: 13.03.2002
(73) Patentinhaber: Endress + Hauser Flowtec AG, 4153 Reinach BL 1 (CH)
(72) Erfinder: Hanser, Frank, 79227 Schallstadt (DE)
(74) Vertreter: Andres, Angelika Maria

(56) Entgegenhaltungen:
- US-A- 3 643 983
- US-A- 4 345 464
- US-A- 4 911 018
- PATENT ABSTRACTS OF JAPAN vol. 1998, no. 06, 30. April 1998 (1998-04-30) & JP 10 048015 A (YOKOGAWA ELECTRIC CORP), 20. Februar 1998 (1998-02-20)

## Beschreibung

Die Erfindung betrifft Erdungsscheiben für einen magnetisch-induktiven Durchflußmesser, von denen mindestens eine zwischen einem jeweiligen an zwei Rohrleitungen vorhandenen Flanschen und jeweiligen am Durchflußmesser vorhandenen Flansch eingesetzt und eingespannt ist, wobei Durchflußmesser und Rohrleitung denselben Nennweitenwert haben.

Magnetisch-induktive Durchflußmesser dienen bekanntlich der Messung des Volumendurchflusses elektrisch leitfähiger Fluide, die in einem zugehörigen Meßrohr, das vollständig elektrisch isolierend oder lediglich innen isoliert ist, fließen. Magnetisch-induktive Durchflußmesser arbeiten nach dem Faradayschen Induktiongesetz. Mittels eines das Meßrohr durchsetzenden Magnetfelds wird im strömenden Fluid eine elektrische Spannung in der Größenordnung von 1 mV induziert, die proportional zum Volumendurchfluß ist, mittels Elektroden abgegriffen und elektronisch gemessen wird.

Bei der Messung dieser recht kleinen Spannungen ist es wichtig, dass für eindeutige Potentialverhältnisse gesorgt ist, d.h. auch das Fluid muss mit einem Schaltungsnullpunkt des magnetisch-induktiven Durchflußmessers verbunden sein.

Für diesen Zweck werden schon immer Erdungsscheiben verwendet, von denen mindestens eine zwischen die erwähnten Flansche der Rohrleitung und des magnetisch-induktiven Durchflußmessers eingesetzt, dort bleibend eingespannt und vom Fluid beströmt ist, so dass das Fluid mittels der Erdungscheibe an mindestens einem Ende des magnetisch-induktiven Durchflußmessers auf das Potential des Schaltungsnullpunkts gelegt ist.

Meist wird auf jeder Seite des Durchflußmessers, also am "rechten" und am "linken" Flansch, eine entsprechende Erdungsscheibe vorgesehen. Die Erdungsscheiben sind mit einem für den Durchflußmesser vorgesehenen elektrischen Schaltungsnullpunkt leitend verbunden und dienen auch der Abdichtung der Flanschverbindung zwischen Rohrleitung und Durchflußmesser.

In der US-A 54 58 003 sind Erdungsscheiben für magnetischinduktive Durchflußmesser mit einem Keramik-Meßrohr beschrieben. Diese Erdungsscheiben bestehen aus einem Metallring und sind zwischen dem Meßrohr und dem jeweiligen Flansch der Rohrleitungen eingesetzt und eingespannt. Das Keramik-Meßrohr weist keine Flansche auf, sondern ist ebenfalls zwischen die Flansche der Rohrleitungen dadurch eingespannt, dass die Flansche der Rohrleitungen mittels Schrauben verbunden sind, die parallel zum Keramik-Meßrohr verlaufen und somit um dieses einen Käfig bilden.

Demgegenüber beschäftigt sich die Erfindung mit Erdungsscheiben für einen anderen Typ von magnetisch-induktiven Durchflußmessern, nämlich mit solchen, die ein innen isoliertes Metallrohr als Meßrohr aufweisen, an dessen jeweiligem Ende ein Flansch angebracht, z.B. angeformt, ist.

Die zueinandergehörenden Flansche von Rohrleitung und Durchflußmesser sind mit Bohrungspaaren versehen, die zur Aufnahme von jeweils einer Schraube dienen, wobei der konkrete Schrauben-Durchmesserwert von einem nationalen oder regionalen Standard vorgegeben ist, also z.B. in Europa/Deutschland durch einen EN/DIN-Standard, in Japan durch einen JIS-Standard oder in den USA durch einen ANSI-Standard oder einen ASME-Standard.

Die Mittelpunkte der Bohrungen liegen jeweils auf einem mit der Rohrleitung bzw. dem Durchflußmesser konzentrischen Bohrungszentralkreis, und die Bohrungen sind auf diesem Kreis jeweils gleichverteilt angeordnet. Die Anzahl der Bohrungen ist ein ganzzahliges Vielfaches von vier, also 4, 8, 12 usw. Die Anzahl der Bohrungen ist ferner vom maximal zulässigen Druck des Fluids abhängig und ebenfalls vom jeweiligen Standard pro Nennweitenwert vorgegeben.

Vom Hersteller müssen die Durchflußmesser so gefertigt werden, dass sie den am Betriebsort gültigen Standard erfüllen, also z.B. so, dass ein Durchflußmesser für maximale Drücke von Klasse 300 nach dem ANSI-Standard bei einem Nennweitenwert von 2 Zoll (≈ 50 mm) 8 Bohrungen der jeweiligen Flansche, dagegen für maximale Drücke von Klasse 150 nach dem ANSI-Standard bei demselben Nennweitenwert von 2 Zoll (≈ 50 mm) nur 4 Bohrungen aufweist.

Für Durchflußmesser mit den erwähnten Flanschen werden von der Anmelderin Erdungsscheiben hergestellt und vertrieben, die mit Bohrungen versehen sind, die den Bohrungspaaren der Flansche entsprechen, so dass die erwähnten Schrauben auch durch die Bohrungen des Erdungsrings hindurchpassen und somit dessen erläuterte Einspannung zwischen den Flanschen möglich ist.

Die Erfindung behebt nun die folgende Problematik. Die Anordnung der Bohrungen der Flansche ist vom nationalen oder regionalen Standard vorgegeben. Allen Standards ist zwar gemeinsam, dass ein jeweils zugehöriger Mittelpunkt der Bohrungen auf dem erwähnten Bohrungszentralkreis liegt, der einen vom Standard festgelegten Durchmesserwert hat. Aber für einen gegebenen Nennweitenwert von Durchflußmesser und Rohrleitung schreiben die einzelnen Standards unterschiedliche, nicht identische Durchmesserwerte des Bohrungszentralkreises und unterschiedliche, nicht identische Bohrungs-Durchmesserwerte vor.

Diese Unterschiede sind zwar nicht sehr groß, aber immerhin größer als in der Mechanik sonst übliche Toleranzen, so dass der Hersteller der Erdungsscheiben gezwungen ist, für jeden Standard und für jeden Nennweitenwert Erdungsscheiben mit Standard-gemäßen Bohrungen anzufertigen und auf Lager zu halten.

Betrachtet man die von allen Standards vorgeschriebenen Durchmesserwerte des Bohrungszentralkreises, so lässt sich feststellen, dass für einen gegebenen Nennweitenwert ein erster Standard einen minimalen Durchmesserwert und ein zweiter Standard einen maximalen Durchmesserwert vorschreibt.

Es ist eine Aufgabe der im Patentanspuch definierten Erfindung, für jeden Nennweitenwert eine einzige Erdungsscheibe anzugeben, obwohl die verschiedenen Standards unterschiedliche Durchmesserwerte des Bohrungszentralkreises und des Bohrungsdurchmessers vorschreiben.

Aus dem Teil-Lösungsgedanken der Erfindung, dass der bisherige Weg bei magnetisch-induktiven Durchflußmessern mit einem innen isolierten und Flansche aufweisenden Metallrohr verlassen und darauf verzichtet wird, die Erdungsscheibe mit Bohrungspaaren zu versehen, die mit den einzelnen Bohrungspaaren der Flansche von Rohrleitung und Durchflußmesser deckungsgleich sind, resultieren folgende Vorteile der Erfindung:

Für jeden Nennweitenwert kommt man nur mit einer einzigen Erdungsscheibe aus, die für diesen Nennweitenwert zu allen Standards passt. Die Lagerhaltung der Erdungsscheiben reduziert sich somit erheblich, und die Herstellung wird z.B. für den Fall, dass dies durch Stanzen geschieht, billiger, da gegenüber bisher weniger Stanzwerkzeuge erforderlich sind.

Die Erdungsscheibe kann aufgrund des gewählten Verlaufs von deren Außenkontur nach dem Einsetzen zwischen die jeweiligen Flansche, aber noch vor dem Anziehen der Schrauben, durch Verdrehen zentriert werden. Dieses Zentrieren ist wichtig, damit die Erdungsscheibe mit der Rohrleitung und dem Durchflußmesser fluchtet und somit nicht in das Fluid ragt.

Die Erfindung wird nun anhand der Figuren der Zeichnung näher erläutert, in der ein Ausführungsbeispiel dargestellt ist. Funktionsgleiche Teile sind in unterschiedlichen Figuren mit denselben Bezugszeichen versehen, jedoch in nachfolgenden Figuren nur dann wiederholt, wenn es sinnvoll erscheint.
- Fig. 1: zeigt schematisch einen in eine Rohrleitung mittels Flanschen eingesetzten magnetischinduktiven Durchflußmesser mit zugehörigen Erdungsscheiben,
- Fig. 2: zeigt in Draufsicht einen der Flansche von Fig. 1, und
- Fig. 3: zeigt in Draufsicht eine Erdungsscheibe.

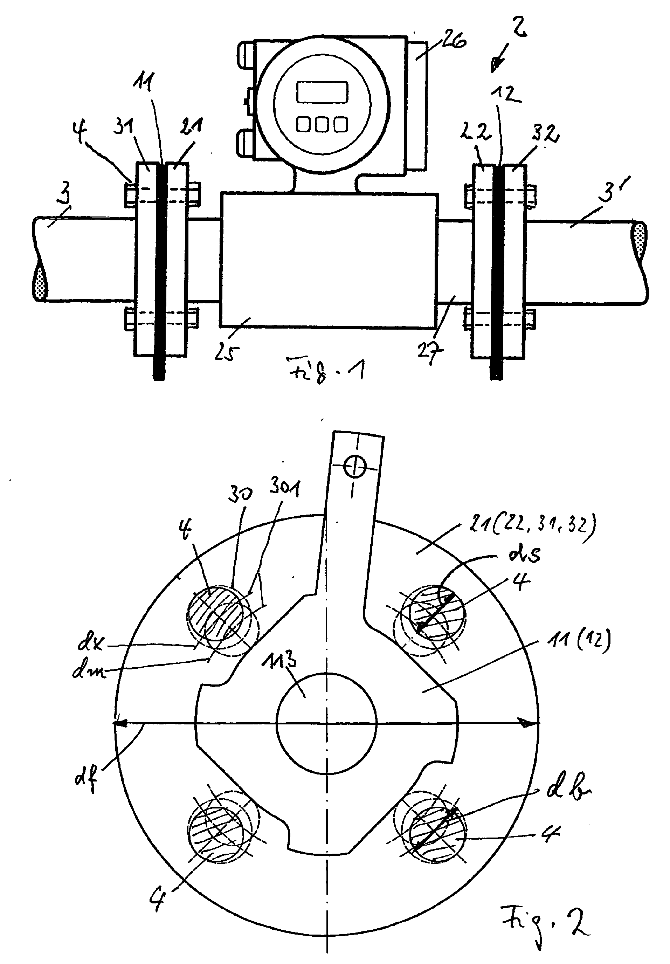

In Fig. 1 ist schematisch ein magnetisch-induktiver Durchflußmesser 2 dargestellt, der einen Durchflußaufnehmer 25 sowie eine Betriebs-, Mess- und Bedien-Elektronik 26 umfasst. Die spezielle Ausgestaltung des Durchflußmessers 2 kann von üblicher Art sein. Dessen Aufbau ist jedemfalls für die Erfindung nur insofern von Interesse, als der Durchflußaufnehmer 25 kein Keramik- oder Kautschuk-Meßrohr haben darf, sondern ein mit einem isolierenden Liner innen beschichtetes Meßrohr 27 aus einem nicht-ferromagnetischen Stahl, also z.B. einem Edelstahl, aufweisen muss.

Daher ist der Durchflußaufnehmer 25 mit einem ersten Flansch 21 und einen zweiten Flansch 22 versehen, die mit dem Meßrohr 27, z.B. durch Schweißen, verbunden sind. Der Durchflußmesser 2 ist, damit er seine durchfluß-messende Funktion erfüllt, zwischen einem an einer ersten Rohrleitung 3 vorhandenen dritten Flansch 31 und einem an einer zweiten Rohrleitung 3' vorhandenen vierten Flansch 32 angeordnet und eingebaut. Die Flansche 22, 32 können ebenfalls angeschweißt sein. Die beiden Rohrleitungen 3, 3' und der Durchflußmesser 2 haben denselben Nennweitenwert, z.B. 25 mm, und führen ein elektrisch leitfähiges, zu messendes Fluid, dessen Volumen-Durchfluß zu messen ist.

Beim Zusammenbau von Durchflußmesser 2 und Rohrleitungen 3, 3' ist mindestens eine Erdungsscheibe erforderlich. Im Ausführungsbeispiel der Fig. 1 sind zwei Erdungsscheiben dargestellt: Eine erste Erdungsscheibe 11 ist zwischen dem ersten und dem dritten Flansch 21, 31 sowie eine zweite Erdungsscheibe 12 zwischen dem zweiten und dem vierten Flansch 22, 32 eingesetzt, zentriert und mittels Schrauben 4 eingespannt, die der mechanisch festen Verbindung der Flansche 21, 31 bzw. der Flansch 22, 32 dienen.

In Fig. 1 ist nicht dargestellt, dass die Erdungsscheiben auf das Potential eines Schaltungsnullpunkts gelegt sind, so dass das Fluid an beiden Enden des Durchflußmessers 2 auf dieses Potential gelegt ist.

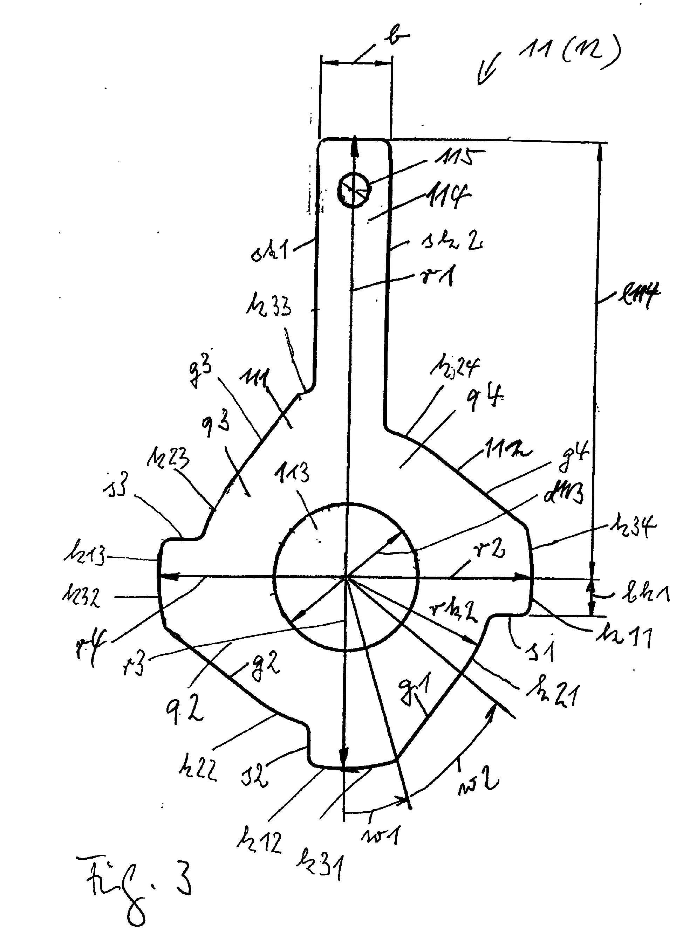

In Fig. 2 ist der Flansch 21 in Draufsicht zusammen mit der Erdungsscheibe 11 dargestellt, wobei Fig. 2 auch für die Flansche 22, 31, 32 bzw. die Erdungsscheibe 12 gültig ist. Die vier Flansche 21, 22, 31, 32 haben einen von einem nationalen oder regionalen Standard vorgegebenen Flansch-Durchmesserwert df; bei diesen Standards handelt es sich z.B. um die eingangs erwähnten EN/DIN-, JIS-, ANSI- oder ASME-Standards.

Die Flansche 21, 22, 31, 32 sind ferner mit einander zugeordneten, jeweils ein Bohrungspaar bildenden und einen jeweiligen Mittelpunkt aufweisenden Bohrungen 30 versehen, die jeweils eine der Schrauben 4 aufnehmen. Die Bohrungen haben einen vom nationalen oder regionalen Standard vorgegebenen Bohrungs-Durchmesserwert db. Die Schrauben 4 haben einen vom jeweiligen Standard vorgegebenen Schrauben-Durchmesserwert ds.

Die Mittelpunkte der Bohrungen 30 der Flansche 21, 22, 31, 32 liegen jeweils auf einem mit den Rohrleitungen 3, 3' bzw. dem Durchflußmesser 2 konzentrischen, einen zugehörigen Durchmesser aufweisenden Bohrungszentralkreis 301, auf dem die Bohrungen 30 wie eingangs erwähnt gleichverteilt angeordnet sind. Im Ausführungsbeispiel der Fig. 2 sind vier Bohrungen 30 vorhanden.

Der Durchmesser des Bohrungszentralkreises 301 ist für einen vorgegebenen Nennweitenwert, also z.B. die erwähnten 25 mm, von den Standards derart vorgegeben, dass ein zu einem ersten Standard gehörender erster Durchmesserwert ein minimaler Durchmesserwert dm und ein zu einem zweiten Standard gehörender zweiter Durchmesserwert ein maximaler Durchmesserwert dx ist.

In Fig. 3 ist in Draufsicht die Erdungsscheibe 11 dargestellt, wobei Fig. 3 die Erdungsscheibe 12 gültig ist. Die Erdungsscheibe 11 umfasst einen ringartigen Teil 111 mit einer in einem ersten, einem zweiten, einem dritten und einem vierten Quadranten q1, q2, q3, q4 liegenden Außenkontur 112, wobei der Quadrant q1 in Fig. 3 unten rechts liegt und die Quadranten wie üblich im Uhrzeigersinn aufeinander folgen.

Ferner hat die Erdungsscheibe 11 eine im ringartigen Teil 111 angeordnete Zentralbohrung 113 mit einem Durchmesser (d113), der etwas größer als der gegebene Nennweitenwert ist, und einen vom ringartigen Teil 111 entlang eines ersten Radius r1 nach außen weisenden Hebel 114. Der Hebel 114 hat eine zum ersten Radius r1 jeweils parallele erste und zweite Seitenkante sk1, sk2 und eine Länge (1114), die größer als der halbe Flansch-Durchmesserwert df ist. Der Hebel 114 hat eine für alle Nennweitenwerte konstante Breite b, die etwa 15 mm betragen kann. Endseitig ist der Hebel 114 mit einer Bohrung 115 versehen, mittels der und einer Schraubenanordnung eine mit einem Schaltungsnullpunkt verbindende Leitung am Hebel 114 fixiert werden kann.

Eine erste Hälfte des Hebels 114 liegt im dritten Quadranten q3 liegt und eine zweite Hälfte des Hebels 114 im vierten Quadranten q4. Der erste Radius r1 bildet die Grenze zwischen drittem und viertem Quadranten q3, q4. Ein zum ersten Radius r1 senkrechter zweiter Radius r2 bildet die Grenze zwischen viertem und erstem Quadranten q4, q1. Ein zum zweiten Radius r2 senkrechter dritter Radius r3 ist die Grenze zwischen erstem und zweitem Quadranten q1, q2, und ein zum dritten Radius r3 senkrechter vierter Radius r4 bildet die Grenze zwischen zweitem und drittem Quadranten q2, q3.

Die Außenkontur 112 setzt sich, gesehen im Uhrzeigersinn, wie folgt zusammen: Im ersten bzw. zweiten bzw. dritten Quadranten q1, q2, q3 hat die Außenkontur 112 ein zum zweiten bzw. dritten bzw. vierten Radius r2, r3, r4 gehörendes jeweiliges erstes Kreisbogenstück k11, k12, k13. Dieses hat eine Länge lk1 gleich der Hälfte der Breite b des Hebels 14 hat, also etwa gleich 7,5 mm. Jeder Radius r2, r3, r4 hat eine Länge, die gleich dem zum gegebenen Nennweitenwert gehörenden halben maximalen Durchmesserwert dx plus dem zugehörigen halben Bohrungs-Durchmesserwert db minus dem zugehörigen Schrauben-Durchmesserwert ds ist.

Im ersten bzw. zweiten bzw. dritten Quadranten q1, q2, q3 hat die Außenkontur 112 ferner ein zweites Kreisbogenstück k21, k22, k23 mit einem Radius rk2, das an das erste Kreisbogenstück k11, k12, k13 mittels eines Absatzes s1, s1, s3 anschließt. Im vierten Quadranten q4 hat die Außenkontur 112 ein an den Hebel 114 anschließendes, den Kreisbogenstücken k21, k22, k23 entsprechendes zweites Kreisbogenstück k24, das den Radius rk2 hat. Der Radius rk2 ist gleich dem halben, zur gegebenen Nennweite gehörenden minimalen Durchmesserwert dm.

Die zweiten Kreisbogenstücke k21, k22, k23, k24 enden bei einem Winkelwert endet, der, beginnend mit dem dritten bzw. vierten bzw. ersten bzw. zweiten Radius r3, r4, r1, r2, additiv aus einem ersten Winkel w1 und einem zweiten Winkel w2 besteht. Für die beiden Winkel w1, w2 lässt sich keine geschlossene mathematische Funktion, sondern nur in der Form einer Tabelle angeben, da zu einem bestimmten Nennweitenwert Winkelwerte gehören, die von Winkelwerten eines anderen Nennweitenwerts verschieden sind.

Die Winkel w1, w2 haben die in der folgenden Tabelle angegeben Werte:

| Nennweitenwert | erster Winkel w1 | zweiter Winkel w2 | Summe von erstem und zweitem Winkel |
|---|---|---|---|
| 15 mm (≈ 0,5") | 19° | 39° | 58° |
| 25 mm (≈ 1") | 16° | 35° | 51° |
| 32 mm | 16° | 25° | 41° |
| 40 mm (≈ 1,5") | 15° | 33° | 48° |
| 50 mm (≈ 2") | 12° | 15° | 27° |
| 65 mm | 10° | 18° | 28° |
| 80 mm (≈ 3") | 8° | 24° | 32° |
| 100 mm (≈ 4") | 8° | 33° | 41° |
| 125 mm | 8° | 16° | 24° |
| 150 mm (≈ 6") | 6° | 20° | 26° |
| 200 mm (≈ 8") | 9° | 13° | 22° |
| 250 mm (≈ 10") | 5° | 14° | 19° |

Die Außenkontur 112 weist ferner in jedem Quadranten q1, q2, q3, q4 ein Geradenstück g1, g2, g3, g4 auf, das das zweite Kreisbogenstück k21, k22, k23, k24 mit einem zum ersten Winkel w1 gehörenden dritten Kreisbogenstück k31, k32, k33, k34 verbindet, von dem ein Radius gleich dem zweiten Radius r2 ist. Schließlich sind im dritten Quadranten q3 das dritte Kreisbogenstück k33 teilweise und im vierten Quadranten q4 das erste Kreisbogenstück vollständig durch den Hebel 114 ersetzt.

Beim Zusammenbau des magnetisch-induktiven Durchflußmessers 2 und der Rohrleitungen 3, 3' wird die mindestens eine Erdungsscheibe 11 bzw. 12 zwischen die einander zugewandten Flansche 21, 31 bzw. 22, 32 geschoben, und dann werden die Schrauben 4 durch die Bohrungen 30 gesteckt.

Vor dem Festziehen der Schrauben 4 mittels zugehöriger Muttern wird die Erdungsscheibe 11 bzw. 12 mittels des Hebels 114 solange im Uhrzeigersinn bis in eine Endstellung gedreht, in der sie sich nicht weiterdrehen lässt. Die Erdungsscheibe 11 bzw. 12 ist dann in der Endstellung zentriert. Nun werden die Muttern fest angezogen, und die mindestens eine Erdungsscheibe 11 bzw. 12 wird mit einem geeigneten Schaltungsnullpunkt elektrisch verbunden.

Die Erdungsscheiben 11, 12 haben, summarisch zunächst ohne den Hebel 114 betrachtet, eine zahnrad-artige Außenkontur 112 mit drei um 90° gegeneinander versetzten "Zähnen"; diese sind von den Kreisbogenstücken k34+k11, k31+k12, k32+k13 gebildet. Der Hebel 114 kann als zum letztgenannten "Zahn" k32+k13 um weitere 90° versetzter vierter "Zahn" betrachtet werden.

## Patentansprüche

1. Erdungsscheibe für einen magnetisch-induktiven Durchflußmesser (2), der einen ersten und einen zweiten Flansch (21, 22) aufweist und der zwischen einem an einer ersten Rohrleitung (3) vorhandenen dritten Flansch (31) und einem an einer zweiten Rohrleitung (3') vorhandenen vierten Flansch (32) angeordnet ist,
- wobei mindestens eine Erdungsscheibe (11, 12) zwischen dem ersten und dem dritten Flansch (21, 31) oder zwischen dem zweiten und dem vierten Flansch (22, 32) eingesetzt, zentriert und eingespannt ist,
- welche Flansche (21, 22; 31, 32) einen von einem nationalen oder regionalen Standard vorgegebenen Flansch-Durchmesserwert (df) haben und mit einander zugeordneten, jeweils ein Bohrungspaar bildenden und einen jeweiligen Mittelpunkt aufweisenden Bohrungen (30) zur Aufnahme von jeweils einer Schraube (4) mit einem vom nationalen oder regionalen Standard vorgegebenen Schrauben-Durchmesserwert (ds) versehen sind, wobei
- die Rohrleitung und der Durchflußmesser denselben Nennweitenwert haben und ein zu messendes Fluid führen,
- die Mittelpunkte der Bohrungen (30) der Flansche jeweils auf einem mit den Rohrleitungen bzw. dem Durchflußmesser konzentrischen Bohrungszentralkreis (301) mit einem Durchmesser liegen,
-- der für einen vorgegebenen Nennweitenwert von den Standards derart vorgegeben ist, dass ein zu einem ersten Standard gehörender erster Durchmesserwert ein minimaler Durchmesserwert (dm) und ein zu einem zweiten Standard gehörender zweiter Durchmesserwert ein maximaler Durchmesserwert (dx) ist,
welche Erdungsscheibe (11, 12) umfasst:
- einen ringartigen Teil (111) mit einer in einem ersten, einem zweiten, einem dritten und einem vierten Quadranten (q1, q2, q3, q4) liegenden Außenkontur (112), wobei die Quadranten im Uhrzeigersinn aufeinander folgen,
- eine im ringartigen Teil angeordnete Zentralbohrung (113) mit einem Durchmesser (d113), der etwas größer als der gegebene Nennweitenwert ist, und
- einen vom ringartigen Teil entlang eines ersten Radius (r1) nach außen weisenden Hebel (114), der
-- eine zum ersten Radius jeweils parallele erste und zweite Seitenkante aufweist,
-- eine Länge (114) hat, die größer als der halbe Flansch-Durchmesserwert (df) ist und
-- eine für alle Nennweitenwerte konstante Breite (b) hat, wobei
-- eine erste Hälfte des Hebels (114) im dritten Quadranten (q3) liegt,
-- eine zweite Hälfte des Hebels (114) im vierten Quadranten (q4) liegt,
-- der erste Radius (r1) die Grenze zwischen drittem und viertem Quadranten (q3; q4) ist,
-- ein zum ersten Radius senkrechter zweiter Radius (r2) die Grenze zwischen viertem und erstem Quadranten (q4; q1) ist,
-- ein zum zweiten Radius senkrechter dritter Radius (r3) die Grenze zwischen erstem und zweitem Quadranten (q1; q2) ist und
-- ein zum dritten Radius senkrechter vierter Radius (r4) die Grenze zwischen zweitem und drittem Quadranten (q2; q3) ist,
- welche Außenkontur (12), gesehen im Uhrzeigersinn, sich zusammensetzt:
-- im ersten bzw. zweiten bzw. dritten Quadranten (q1, q2, q3) aus einem zum zweiten bzw. dritten bzw. vierten Radius (r2, r3, r4) gehörenden jeweiligen ersten Kreisbogenstück (k11, k12, k13),
--- das eine Länge (lk1) gleich der Hälfte der Breite (b) des Hebels (14) hat und
--- von welchen Radien (r2, r3, r4) eine Länge gleich ist dem zum gegebenen Nennweitenwert gehörenden halben maximalen Durchmesserwert (dx) plus dem zugehörigen halben Bohrungs-Durchmesserwert (db) minus dem zugehörigen Schrauben-Durchmesserwert (ds),
-- im ersten bzw. zweiten bzw. dritten Quadranten (q1, q2, q3) aus einem an das erste Kreisbogenstück (k11; k12; k13) mittels eines Absatzes (s1, s1, s3) anschließenden zweiten Kreisbogenstück (k21, k22, k23) mit einem Radius (rk2) und im vierten Quadranten (q4) aus einem an den Hebel (14) anschließenden entsprechenden zweiten Kreisbogenstück (k24) mit demselben Radius,
--- der gleich dem halben, zur gegebenen Nennweite gehörenden minimalen Durchmesserwert (dm) ist und
--- welches zweite Kreisbogenstück (k21, k22, k23, k24) bei einem Winkelwert endet, der, beginnend mit dem dritten bzw. vierten bzw. ersten bzw. zweiten Radius (r3, r4, r1, r2), additiv aus einem ersten und einem zweiten Winkel (w1, w2) besteht, welche Winkel die in der folgenden Tabelle angegeben Werte haben:
| **Nennweitenwert** | **erster Winkel (w1)** | **zweiter Winkel (w2)** | **Summe von erstem und zweitem Winkel** |
|---|---|---|---|
| 15 mm (≈ 0,5") | 19° | 39° | 58° |
| 25 mm (≈ 1") | 16° | 35° | 51° |
| 32 mm | 16° | 25° | 41° |
| 40 mm (≈ 1,5") | 15° | 33° | 48° |
| 50 mm (≈ 2") | 12° | 15° | 27° |
| 65 mm | 10° | 18° | 28° |
| 80 mm (≈ 3") | 8° | 24° | 32° |
| 100 mm (≈ 4") | 8° | 33° | 41° |
| 125 mm | 8° | 16° | 24° |
| 150 mm (≈ 6") | 6° | 20° | 26° |
| 200 mm (≈ 8") | 9° | 13° | 22° |
| 250 mm (≈ 10") | 5° | 14° | 19° |
-- im ersten bzw. zweiten bzw. dritten bzw. vierten Quadranten (q1, q2, q3, q4) aus einem Geradenstück (g1, g2, g3, g4),
--- das das zweite Kreisbogenstück (k21, k22, k23, k24) mit einem zum ersten Winkel (w1) gehörenden dritten Kreisbogenstück (k31, k32, k33, k34) verbindet, von dem ein Radius gleich dem zweiten Radius (r2) ist,
--- wobei im dritten Quadranten (q3) das dritte Kreisbogenstück (k33) teilweise und im vierten Quadranten (q4) das erste Kreisbogenstück vollständig durch den Hebel ersetzt sind.

## Claims

1. Ground disk for an electromagnetic flowmeter (2) that exhibits a first and a second flange (21, 22) and is arranged between a third flange (31), fitted on a first pipe (3), and a fourth flange (32), fitted on a second pipe (3'),
- where at least one ground disk (11, 12) is deployed, centered and clamped between the first and the third flange (21, 31) or between the second and the fourth flange (22, 32),
- where the flanges (21, 22; 31, 32) are of a flange diameter value (df) specified by a national or regional standard and exhibit bores (30), mutually assigned, forming a bore pair and exhibiting a center point, to hold a screw (4) with a screw diameter (ds) specified by the national or regional standard, whereby
- the pipe and the flowmeter have the same nominal diameter and contain a fluid to be measured,
- the center points of the bores (30) of the flanges are each on a bore central circle (301) concentric with the pipes or the flowmeter with a diameter,
-- which is specified by the standards in such a way for the specified nominal diameter value that a first diameter value pertaining to a first standard is a minimum diameter value (dm) and a second diameter value pertaining to a second standard is a maximum diameter value (dx),
where the ground disk (11, 12) comprises:
- a circular element (111) with an outer contour (112) in a first, second, third and fourth quadrant (q1, q2, q3, q4) where the quadrants run in a clockwise direction,
- a central bore (113) arranged in the circular element with a diameter (d113) that is slightly bigger than the given nominal diameter value and
- a lever (114), extending from the circular element outwards along a first radius (r1), which
-- exhibits a first and second side edge that are both parallel to the first radius
-- is of a length (114) that is larger than half the flange diameter value (df) and
-- has a constant width (b) for all nominal diameter values whereby
-- a first half of the lever (114) is in the first quadrant (q3)
-- a second half of the lever (114) is in the fourth quadrant (q4)
-- the first radius (r1) constitutes the border between the third and fourth quadrant (q3; q4),
-- a second radius (r2) perpendicular to the first radius is the border between the fourth and first quadrant (q4; q1)
-- a third radius (r3) perpendicular to the second radius is the border between the first and second quadrant (q1; q2) and
-- a fourth radius (r4) perpendicular to the third radius is the border between the second and third quadrant (q2; q3),
- where the outer contour (12), viewed in a clockwise direction, is comprised as follows:
-- in the first or second or third quadrant (q1, q2, q3), the outer contour consists of a first arc (k11, k12, k13) pertaining to the second or third or fourth radius (r2, r3, r4)
--- where said arc is of a length (lk1) which is half the width (b) of the lever (14) and
--- where the radii (r2, r3, r4) have the same length as half the maximum diameter value (dx), pertaining to the given nominal diameter value, plus the related half bore diameter value (db) minus the associated screw diameter value (ds),
-- in the first or second or third quadrant (q1, q2, q3), the outer contour consists of a second arc (k21, k22, k23), which follows from the first arc (k11; k12; k13) and is caused by a shoulder (s1, s1, s3), with a radius (rk2). In the fourth quadrant (q4), the outer contour consists of a second arc (k24), leading from the lever (14) with the same radius
--- which is the same as half the minimum diameter value (dm) pertaining to the nominal diameter given and
--- where the second arc (k21, k22, k23, k24) ends at an angle value which, starting with the third or the fourth or the first or the second radius (r3, r4, r1, r2) is the composite of a first and a second angle (w1, w2), whereby the angles have the values as specified in the following table:
| Nominal diameter value | First angle (wl) | Second angle (w2) | Sum of the first and second angle |
|---|---|---|---|
| 15mm (≈ 0.5") | 19 ° | 39 ° | 58 ° |
| 25 mm (≈ 1") | 16 ° | 35 ° | 51 ° |
| 32 mm | 16 ° | 25 ° | 41 ° |
| 40 mm (≈ 1.5") | 15 ° | 33 ° | 48 ° |
| 50 mm (≈ 2") | 12 ° | 15 ° | 27 ° |
| 65 mm | 10 ° | 18 ° | 28 ° |
| 80 mm (≈ 3") | 8 ° | 24 ° | 32 ° |
| 100 mm (≈ 4") | 8 ° | 33 ° | 41 ° |
| 125mm | 8 ° | 16 ° | 24 ° |
| 150 mm (≈ 6") | 6 ° | 20 ° | 26 ° |
| 200 mm (≈ 8") | 9 ° | 13 ° | 22 ° |
| 250 mm (≈ 10") | 5 ° | 14 ° | 19 ° |
-- in the first or second or third or fourth quadrant (q1, q2, q3, q4), the outer contour consists of a straight section (g1, g2, g3, g4)
--- that joins the second arc (k21, k22, k23, k24) to a third arc (k31, k32, k33, k34) pertaining to the first angle (w1) of which one radius is the same as the second radius (r2)
--- whereby in the third quadrant (q3), the third arc (k33) is partially replaced by the lever and in the fourth quadrant (q4), the first arc is completely replaced by the lever.

## Revendications

1. Disque de masse destiné à un débitmètre magnéto-inductif (2), qui comporte une première et une deuxième bride (21, 22) et qui est disposé entre une troisième bride (31) présente sur une première conduite (3) et une quatrième bride (32) présente sur une deuxième conduite (3'),
- au moins un disque de masse (11, 12) étant inséré, centré et serré entre la première et la troisième bride (21, 31) ou entre la deuxième et la quatrième bride (22, 32),
- lesquelles brides (21, 22 ; 31, 32) présentent un diamètre prescrit par une norme nationale ou régionale (df) et sont munies d'alésages (30) conjugués, alésages (30) comportant respectivement une paire d'alésages et un centre respectif, destinés à recevoir respectivement une vis (4) d'un diamètre (ds) prescrit par une norme nationale ou régionale,
- la conduite et le débitmètre présentant le même diamètre nominal et conduisant le fluide à mesurer,
- les centres des alésages (30) des brides se situant sur un cercle central des alésages (301) concentrique avec les conduites ou le débitmètre, d'un diamètre,
-- lequel est prédéfini par les normes pour un diamètre nominal prédéfini, de telle manière qu'un premier diamètre appartenant à une première norme représente un diamètre minimal (dm) et un deuxième diamètre appartenant à une deuxième norme représente un diamètre maximal (dx),
lequel disque de masse (11, 12) comprend :
- une partie annulaire (111) avec un contour extérieur (112) situé dans un premier, un deuxième, un troisième et un quatrième quadrant (q1, q2, q3, q4), les quadrants se suivant dans le sens des aiguilles d'une montre,
- un alésage central (113) disposé dans la partie annulaire, d'un diamètre (d113), qui est quelque peu supérieur au diamètre nominal défini, et
- un levier (114) orienté vers l'extérieur de la partie annulaire, le long d'un premier rayon (r1), qui
-- présente une première et une deuxième arête latérale, parallèles au premier rayon,
-- présente une longueur (114), qui est supérieure au demi-diamètre de bride (df) et
-- présente une largeur constante (b) pour tous les diamètres nominaux,
-- une première moitié du levier (114) étant située dans le troisième quadrant (q3),
-- une deuxième moitié du levier (114) étant située dans le quatrième quadrant (q4),
-- le premier rayon (r1) constituant la limite entre le troisième et le quatrième quadrant (q3 ; q4),
-- un deuxième rayon (r2), perpendiculaire au premier rayon, constituant la limite entre le quatrième et le premier quadrant (q4 ; q1),
-- un troisième rayon (r3), perpendiculaire au deuxième rayon, constituant la limite entre le premier et le deuxième quadrant (q1 ; q2) et
-- un quatrième rayon (r4), perpendiculaire au troisième rayon, constituant la limite entre le deuxième et le troisième quadrant (q2 ; q3),
- lequel contour extérieur (12), vu dans le sens des aiguilles d'une montre, se compose :
-- dans le premier ou deuxième ou troisième quadrant (q1, q2, q3), d'un premier arc de cercle (k11, k12, k13) appartenant au deuxième ou troisième ou quatrième rayon (r2, r3, r4),
--- qui présente une longueur (lk1) égale à la moitié de la largeur (b) du levier (14) et
--- parmi lesquels rayons (r2, r3, r4) une longueur est égale au demi-diamètre maximal (dx) appartenant au diamètre nominal déterminé, plus le demi-diamètre d'alésage (db) correspondant, moins le diamètre de vis (ds) correspondant,
-- dans le premier ou deuxième ou troisième quadrant (q1, q2, q3), d'un deuxième arc de cercle (k21, k22, k23) adjacent au premier arc de cercle (k11, k12, k13) au moyen d'un épaulement (s1, s2, s3), de rayon (rk2) et, dans le quatrième quadrant (q4), d'un deuxième arc de cercle (k24) correspondant, adjacent au levier (14), de rayon identique,
--- qui est égal au demi-diamètre minimal (dm) appartenant au diamètre nominal déterminé, et
--- lequel deuxième arc de cercle (k21, k22, k23, k24) se termine avec un angle qui, commençant avec le troisième ou le quatrième ou le premier ou le deuxième rayon (r3, r4, r1, r2), est constitué de façon additive d'un premier et d'un deuxième angle (w1, w2), lesquels angles présentent les valeurs indiquées dans la table suivante :
| Diamètre nominal | Premier angle (w1) | Deuxième angle (w2) | Somme du premier et du deuxième angle |
|---|---|---|---|
| 15 mm (≈ 0,5") | 19 ° | 39 ° | 58 ° |
| 25 mm (≈ 1") | 16 ° | 35 ° | 51 ° |
| 32 mm | 16 ° | 25 ° | 41 ° |
| 40 mm (≈ 1,5") | 15 ° | 33 ° | 48 ° |
| 50 mm (≈ 2") | 12 ° | 15 ° | 27 ° |
| 65 mm | 10 ° | 18 ° | 28 ° |
| 80 mm (≈ 3") | 8 ° | 24 ° | 32 ° |
| 100 mm (≈ 4") | 8 ° | 33 ° | 41 ° |
| 125mm | 8 ° | 16 ° | 24 ° |
| 150 mm (≈ 6") | 6 ° | 20 ° | 26 ° |
| 200 mm (≈ 8") | 9 ° | 13 ° | 22 ° |
| 250 mm (≈ 10") | 5 ° | 14 ° | 19 ° |
-- dans le premier ou le deuxième ou le troisième ou le quatrième quadrant (q1, q2, q3, q4), d'une droite (g1, g2, g3, g4),
--- qui relie le deuxième arc de cercle (k21, k22, k23, k24) avec un troisième arc de cercle (k31, k32, k33, k34) appartenant au premier angle (w1), duquel un rayon est égal au deuxième rayon (r2),
--- le troisième arc de cercle (k33) étant, dans le troisième quadrant (q3), remplacé partiellement par le levier et le premier arc de cercle étant, dans le quatrième quadrant (q4), remplacé intégralement par le levier.
